# FASCICULE DE BREVET EUROPEEN

(11) **EP 1 361 954 B1**
(45) Date de publication et mention de la délivrance du brevet: **31.01.2007**
(21) Numéro de dépôt: 01273721.9
(22) Date de dépôt: 11.12.2001
(51) Int. Cl.: B41C 1/05, B23K 26/06, B23K 26/067

(54) **DISPOSITIF DE FABRICATION D'UN CLICHE D'IMPRESSION POUR L'IMPRIMERIE**
VORRICHTUNG ZUR HERSTELLUNG EINER DRUCKPLATTE
DEVICE FOR MAKING AN ENGRAVING PLATE FOR PRINTING

(30) Priorité: 14.02.2001 FR 0101970
(43) Date de publication de la demande: 19.11.2003
(73) Titulaire: Sagadev, 54340 Pompey (FR)
(72) Inventeur: RZESZOTKO, Michel, 54820 Marbache (FR); AUTRIC, Michel, F-83330 Le Plan du Castellet (FR); SARNET, Thierry, Université Paris xi Bat 220, 91405 ORSAY (FR)
(74) Mandataire: Poupon, Michel
(86) Numéro de dépôt international: PCT/FR2001/003907
(87) Numéro de publication internationale: WO 2002/064370

(56) Documents cités:
- FR-A- 2 779 090
- US-A- 6 150 629

## Description

La présente invention concerne un dispositif de fabrication d'un cliché d'impression pour l'imprimerie.

Elle se rapporte plus particulièrement à un dispositif de fabrication de clichés d'impression pour l'imprimerie tel que la flexographie, le Letterpress®, faisant intervenir une phase de gravure au laser, tel que, par exemple, décrit dans la demande de brevet FR-A-2 779 090. Selon l'enseignement de ce document, une couche polymérisée est soumise à une phase de gravure au laser, au moyen d'un laser opérant à une longueur d'onde comprise entre 200 et 400 nm. Ce procédé offre l'avantage d'être essentiellement sans contact mécanique, c'est-à-dire mettant en oeuvre un usinage photonique du matériau polymérisé, permettant de s'affranchir des étapes de traitement photochimique des procédés conventionnels.

Ce type de fabrication permet en outre d'obtenir des temps de fabrication de durée moindre que les procédés classiques notamment décrits dans la demande susmentionnée.

Bien que la fabrication de clichés d'impression flexographique par laser soit connue, elle continue de faire l'objet de développements visant à améliorer la qualité de la réalisation du cliché.

Ainsi, l'invention a pour but de proposer un dispositif de fabrication de clichés d'impression pour l'imprimerie par laser apte à contrôler la bonne marche de réalisation du cliché et sa définition de manière à permettre un rapport qualité/rapidité répondants aux exigences demandées.

A cet effet, la présente invention a pour objet un dispositif de fabrication d'un cliché d'impression pour l'imprimerie faisant intervenir une phase de gravure au laser sur une couche polymérisée d'un support, caractérisé en ce qu'il comprend au moins deux faisceaux de longueurs d'onde différentes distribués par au moins une source laser, dont au moins l'un des faisceaux opère dans l'infrarouge afin de graver la surface du polymère à grande vitesse et moyenne résolution et au moins l'autre faisceau opère dans l'ultraviolet afin de graver à haute résolution.

Suivant quelques dispositions intéressantes de l'invention:
- le dispositif comporte une unité de contrôle commandant le fonctionnement de ou des sources lasers ainsi que la mise au point d'une optique de focalisation disposée au droit de la surface polymère pour chaque faisceau afin de conserver la distance optimale entre l'optique de focalisation et la surface du polymère à traiter;
- à la sortie d'au moins une des sources lasers est disposé un multiplicateur de fréquence permettant de diviser la longueur d'onde d'émission du même facteur, associé à des moyens séparateurs acheminant chaque faisceau à l'optique de focalisation ;
- l'unité de contrôle comporte en outre un système de contrôle en temps réel de la gravure du polymère destiné à asservir et piloter les mouvements de l'optique de focalisation associé à chaque faisceau ;
- chacun des faisceaux comprend au niveau de la zone d'interaction un système d'aspiration et/ou de soufflage destiné à éliminer les éventuels résidus et produits d'ablation lors de la gravure ;
- un bloc de contrôle optique et/ou énergétique est placé sur le trajet optique du ou des faisceaux ;
- le polymère destiné à être gravé est réalisé en matière élastomère, du type EPDM (Ethylène-Propylène-Diène-Monomère).

Selon un mode de réalisation préférentiel, le système de contrôle est constitué d'un système d'acquisition d'images en trois dimensions de la gravure des plaques en polymère, transmettant des données en temps réel à l'unité de contrôle et à la partie logicielle d'un système de traitement de données réalisant une reconstitution tridimensionnelle de la plaque flexographique traitée et la compare avec les fichiers sources, acquis dans l'unité centrale, afin de pouvoir asservir et piloter les mouvements du bloc optique et/ou de la tête de gravure.

Selon une caractéristique avantageuse, le système d'aspiration et/ou soufflage est constitué d'une buse d'aspiration/soufflage coaxiale avec le(s) faisceau(x) laser(s).

Selon encore une caractéristique avantageuse, le bloc optique et/ou énergétique est constitué d'une photodiode et/ou d'un calorimètre ; ce bloc de contrôle est amovible et utilisable à la demande.

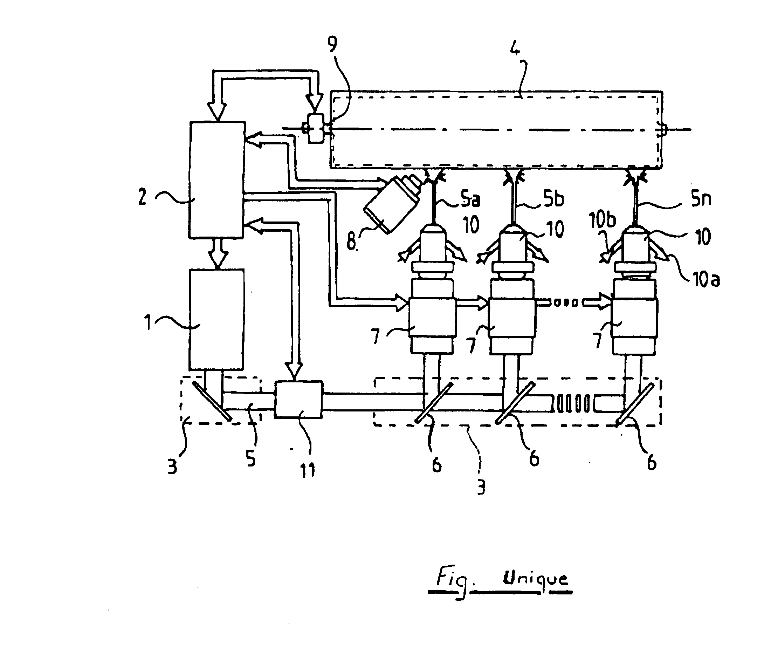

Les caractéristiques de l'invention mentionnées ci-dessus, ainsi que d'autres, apparaîtront plus clairement à la lecture de la description suivante d'un exemple de réalisation, en se référant à la figure unique annexée, donnée uniquement à titre d'exemple non limitatif, illustrant de manière schématique le dispositif de fabrication de clichés d'impression flexographique conforme à l'invention.

Dans la suite de la description, il est fait appel au terme « ablation », dont nous rappelons ci-après sa signification : action d'enlever de la matière par décomposition, fusion, érosion, sublimation, vaporisation etc....

On peut voir sur la figure unique, un exemple de réalisation d'un dispositif de fabrication de clichés d'impression flexographique. Ce dispositif comprend une source laser 1, commandée par une unité de contrôle 2 qui sera décrite en détail dans la suite de la description. A la sortie de cette source laser sont placés des moyens de transport 3 du faisceau 5 délivré par la source laser 1 afin d'acheminer celui-ci vers la surface du polymère 4 à graver.

Ces moyens de transport 3 du faisceau 5 sont constitués par exemple de miroirs, comme représentés sur la figure, et/ou de lentilles et/ou de fibres optiques.

Selon la présente invention, la source laser 1 distribue au moins deux faisceaux 5a, 5b,..., 5n de longueurs d'onde différentes, dont au moins un premier faisceau opère dans l'infrarouge afin de graver la surface du polymère 4 à grande vitesse et moyenne résolution et au moins un second faisceau opère dans l'ultraviolet afin de graver la surface du polymère 4 à haute résolution.

La source laser 1 est du type laser à solide (Nd:YLF, Nd:YV04, Nd:YAG) ou source à impulsions ultra courtes (femtosecondes) type Saphir:Titane ou une source laser à semi-conducteurs (diodes lasers de puissance).

Ces faisceaux 5a,...,5n de longueurs d'ondes différentes sont avantageusement obtenues en disposant à la sortie de la source laser 1 un multiplicateur de fréquence par cristaux non-linéaires -ou générateur d'harmonique-, permettant de doubler, tripler ou quadrupler la fréquence et par conséquent de diviser la longueur d'onde d'émission du même facteur afin d'obtenir des rayonnements visibles, par exemple à 532 nm, et/ou ultraviolets compris entre 400 et 200 nm.

Afin de simplifier la description, on décrira par la suite le cheminement d'un seul faisceau laser, par exemple désigné par la référence générale 5a, jusqu'à la surface du polymère 4, ce cheminement étant similaire pour tous les faisceaux 5n.

Les différents faisceaux ainsi obtenus sont alors séparés au moyen de lames séparatrices et/ou de miroirs dichroïques 6, représentés sur la figure, ou d'un système dispersif tel que prisme ou réseau, désigné par la suite moyens séparateurs 6 et acheminés à une optique de focalisation 7 destinée à concentrer le faisceau à la surface du polymère 4 pour la gravure.

L'optique de focalisation 7 permet de faire varier la densité surfacique d'énergie, ou fluence, présente à la surface du polymère 4 à graver.

On comprend également que lors de la gravure du polymère 4, la surface de celui-ci s'éloigne de l'optique de focalisation 7. Si la profondeur de gravure est relativement importante, la zone traitée sort de la profondeur de champ et il devient alors nécessaire de rattraper ce décalage par un mouvement du bloc optique 7 ou une mise au point interne par déplacement interne des lentilles du bloc optique 7. Pour ce faire, un système de focalisation automatique, non représenté, est incorporé au bloc optique 7 afin de conserver la distance optimale entre la lentille de focalisation et la surface du polymère 4.

Ce système automatique peut avantageusement être constitué d'un senseur de distance (ou d'une cellule optique) couplé à un système de micro-déplacement motorisé.

Ce système désigné par le terme "autofocus" est également commandé par l'unité de contrôle 2 destinée à vérifier en temps réel la bonne marche du traitement au niveau de la surface du polymère 4 et avertir, si besoin est, l'utilisateur au moyen d'une alarme visuelle ou sonore ainsi que le programme de commande du dispositif selon l'invention.

Cette unité de contrôle 2 est constituée en outre, par exemple, d'un système d'acquisition d'images en trois dimensions 8 permettant un contrôle tridimensionnel en temps réel de la gravure des plaques en polymère 4. Les données sont ainsi transmises à l'unité de contrôle 2 et à la partie logicielle, par exemple d'un système de traitement de données, non représenté, constitué d'une console reliée à une unité centrale, qui réalisent une reconstitution tridimensionnelle de la plaque flexographique traitée 4 et la compare avec les fichiers sources, acquis dans l'unité centrale, afin de pouvoir asservir et piloter les mouvements du bloc optique et/ou de la tête de gravure. L'unité peut en outre commander également le déplacement, par rotation ou translation, du support 9 du polymère 4.

La base de ce système tridimensionnel 8 est constituée selon un mode préférentiel d'un microscope optique dynamique tridimensionnel qui réalise une série d'images en fonction de la profondeur et utilise des algorithmes de déconvolution et de reconstitution afin de restituer une image tridimensionnelle de la zone à graver.

Selon une variante, on comprend que le système de contrôle 8 en temps réel de la réalisation de la gravure peut être basé sur un microscope confocal tridimensionnel ou sur un système stéréoscopique sur deux axes optiques avec triangulation des données XYZ.

Par ailleurs, chacun des faisceaux 5a,..., 5n comprend, au niveau de la zone d'interaction un système 10 d'aspiration 10a et/ou soufflage 10b afin d'éliminer les éventuels résidus et produits d'ablation lors de la gravure. Ce système 10 d'aspiration et/ou soufflage est par exemple constitué d'une buse d'aspiration/soufflage coaxiale avec le(s) faisceau(x) laser(s) 5a,..., 5n , tel qu'illustré sur la figure.

Avantageusement le dispositif selon l'invention comprend également un bloc de contrôle optique et/ou énergétique 11 placé, par exemple, sur le trajet optique du ou des faisceaux 5a,..., 5n, comme visible sur la figure, afin de s'assurer de la stabilité de fonctionnement de la source et de pouvoir intervenir sur la ou les sources lasers 1 si nécessaire. Ce bloc 11 est éventuellement constitué d'une photodiode et d'un calorimètre. Une infime partie du faisceau 5 peut être déviée sur le bloc de contrôle au moyen d'une lame séparatrice.

Selon une variante, le bloc de contrôle 11 est amovible et utilisable à la demande. Dans ce cas, on ne prélève qu'un échantillonnage à des intervalles de temps donnés.

On peut voir sur la figure que la plaque en polymère 4 est disposée sur un support 9 présentant la forme d'un tambour. On comprend cependant que ce support peut être plan et disposé horizontalement ou verticalement ou encore sur un plan incliné permettant avantageusement de gagner de la place au sol.

Par ailleurs, on notera que la plaque 4 est avantageusement immobilisée sur son support 9 au moyen d'un système d'aspiration sous vide partiel, non représenté, de la plaque 4 disposée sur le tambour.

Selon un second mode de réalisation non représenté, le dispositif est constitué d'au moins deux sources lasers 1 fournissant les différents faisceaux 5a,..., 5n de la même manière que celle décrite ci-dessus.

On notera toutefois, à la différence du premier mode de réalisation, que dans le cas où l'une des sources laser est constitué d'un laser à excimères ou à gaz, celui-ci ne délivrera qu'un unique faisceau de rayonnement ultraviolet compris entre 400 et 150 nm, et ne comprendra pas par conséquent de multiplicateur de fréquence inadapté à ces types de lasers.

On comprend toutefois que la possibilité d'utiliser une source continue modulée à haute fréquence est aussi envisagée ainsi qu'une combinaison de plusieurs types de sources lasers citées est aussi envisageable.

Dans la description ci-dessus, il a été fait allusion d'une plaque en polymère disposée sur une couche support 9. Cette plaque en polymère 4 est avantageusement en matière élastomère, du type EPDM (Ethylène, Propylène, Diène, Monomère) présentant de bonnes propriétés mécaniques, telles qu'un bon rendement d'ablation avec une bonne qualité de gravure.

Ces propriétés mécaniques du polymère ainsi que son comportement en ablation peuvent être optimisés en modifiant son taux de réticulation, la nature de l'agent réticulant, la nature de la charge et son taux ou l' état de surface. Le but de l'optimisation du matériau est d'obtenir le meilleur rendement d'ablation possible (Volume ablaté / (Puissance Moyenne X Temps d'Interaction)) avec la meilleure qualité de gravure possible (meilleure résolution, moins d'effets thermiques), en fonction des paramètres lasers optimums.

Par ailleurs, afin de rigidifier le matériau et lui conférer une bonne stabilité dimensionnelle une fois la gravure réalisée, il est possible de réticuler le matériau par l'intermédiaire de lampes ultraviolets ou encore de le traiter thermiquement en étuve. On notera avantageusement à cet effet que le dispositif selon l'invention comporte un poste d'étuvage ou de réticulation.

Selon une variante de réalisation, la plaque en polymère comporte une structure rigide du type fibre de verre ou céramique.

Le fonctionnement du dispositif ressort déjà de la description qui en a été faite ci-dessus et va maintenant être expliqué en relation avec la figure.

L'unité de contrôle 2 commande le fonctionnement de la ou des sources lasers 1 afin d'acheminer le ou les faisceaux 5a,..., 5n de longueur d'ondes différentes vers la surface du polymère 4 à graver. Chaque faisceau acheminé vers la surface du polymère réalise alors une ablation de celle-ci.

En effet, suite au tir de la ou des sources lasers, la matière est ablatée. Cette ablation de matière entraîne la formation devant la surface du polymère d'un nuage composé de plasma, de vapeurs, de particules de petite taille et autres résidus d'ablation. Ce nuage peut absorber une partie du rayonnement laser incident et diminuer les performances de l'ablation. Le système 10 d'aspiration et/ou soufflage permet de ce fait de diminuer l'effet d'écran induit par ce nuage.

Le bloc de contrôle 8 compare en temps réel le résultat de l'ablation au fichier source, et permet de piloter le laser afin que la gravure réalisée soit en adéquation avec la qualité et la rapidité demandées.

On notera que la durée des impulsions laser est avantageusement la plus courte possible, du type nano-seconde, pico-seconde ou femto-seconde, avec une fréquence de répétition d'impulsions la plus élevée possible et comporte une fluence de l'ordre de 2 à 5 Joules/cm².

Dans le cas de deux faisceaux, dont l'un opère dans l'infrarouge et l'autre dans l'ultraviolet, le travail réalisé par ce deuxième faisceau peut être partiel, c'est-à-dire uniquement sur les zones nécessitant une haute résolution, ou complet sur toute la surface.

Dans le cas de plusieurs sources lasers, on comprend que l'unité de contrôle 2 peut, afin d'obtenir une exécution plus rapide de la gravure du polymère 4, piloter au moins deux faisceaux simultanément, afin éventuellement de les faire travailler sur la même zone, simultanément ou avec un décalage temporel permettant avantageusement d'augmenter l'apport d'énergie local.

On notera que le dispositif de gravure décrit ci-dessus travaille dans l'air à la pression atmosphérique et à la température ambiante. Cependant, on comprend aisément que sans sortir du cadre de l'invention, le dispositif est apte à fonctionner dans un milieu liquide ou gazeux, sous vide ou sous pression et à des températures élevées ou abaissées.

On comprend à la lecture de la description ci-dessus que le dispositif de la présente invention est relativement simple à réaliser et permet d'obtenir des clichés d'impression flexographique de bonne qualité comparé à un dispositif de gravure classique.

## Revendications

1. Dispositif de fabrication d'un cliché d'impression flexographique pour l'imprimerie faisant intervenir une phase de gravure au laser sur une couche polymérisée d'un support, **caractérisé en ce qu'**il comprend au moins deux faisceaux (5n) de longueurs d'onde différentes distribués par au moins une source laser (1), dont au moins l'un des faisceaux opère dans l'infrarouge afin de graver la surface du polymère (4) à grande vitesse et moyenne résolution et au moins l'autre faisceau opère dans l'ultraviolet afin de graver à haute résolution.

2. Dispositif de fabrication selon la revendication 1, **caractérisé en ce qu'**il comporte une unité de contrôle (2) commandant le fonctionnement de la ou des sources lasers (1) ainsi que la mise au point d'une optique de focalisation (7) disposée au droit de la surface polymère (4) pour chaque faisceau afin de conserver la distance optimale entre l'optique de focalisation (7) et la surface du polymère (4) à traiter.

3. Dispositif de fabrication selon la revendication 2, **caractérisé en ce qu'**il est disposé à la sortie d'au moins une des sources lasers (1) un multiplicateur de fréquence permettant de diviser la longueur d'onde d'émission du même facteur, associé à des moyens séparateurs (6) acheminant chaque faisceau à l'optique de focalisation (7).

4. Dispositif de fabrication selon la revendication 2 ou 3, **caractérisé en ce que** l'unité de contrôle (2) comporte en outre un système de contrôle (8) en temps réel de la gravure du polymère (4) destiné à asservir et piloter les mouvements de l'optique de focalisation (7) associée à chaque faisceau.

5. Dispositif de fabrication selon l'une des revendications précédentes, **caractérisé en ce que** chacun des faisceaux comprend au niveau de la zone d'interaction un système (10) d'aspiration (10a) et/ou de soufflage (10b) destiné à éliminer les éventuels résidus et produits d'ablation lors de la gravure.

6. Dispositif de fabrication selon l'une des revendications précédentes, **caractérisé en ce qu'**il comprend un bloc de contrôle optique et/ou énergétique (11) placé sur le trajet optique du ou des faisceaux.

7. Dispositif de fabrication selon la revendication 3, **caractérisé en ce que** le système de contrôle (8) est constitué d'un système d'acquisition d'images en trois dimensions de la gravure des plaques en polymère (4), transmettant des données en temps réel à l'unité de contrôle (2) et à la partie logicielle d'un système de traitement de données réalisant une reconstitution tridimensionnelle de la plaque flexographique traitée (4) et la compare avec les fichiers sources, acquis dans l'unité centrale, afin de pouvoir asservir et piloter les mouvements du bloc optique et/ou de la tête de gravure.

8. Dispositif de fabrication selon la revendication 4, **caractérisé en ce que** le système (10) d'aspiration et/ou soufflage est constitué d'une buse d'aspiration/soufflage coaxiale avec le(s) faisceau(x) laser(s) (5a,..., 5n).

9. Dispositif de fabrication selon la revendication 5, **caractérisé en ce que** le bloc optique et/ou énergétique (11) est constitué d'une photodiode et d'un calorimètre.

10. Dispositif de fabrication selon la revendication 5 ou 8, **caractérisé en ce que** le bloc de contrôle (11) est amovible et utilisable à la demande.

11. Dispositif de fabrication selon l'une quelconque des revendications précédentes, **caractérisé en ce que** le polymère (4) est réalisé en matière élastomère, du type EPDM (Ethylène-Propylène-Diène-Monomère).

12. Dispositif de fabrication selon la revendication 11, **caractérisé en ce que** la plaque en polymère (4) comporte une structure rigide du type fibre de verre ou céramique.

## Claims

1. Device for producing a flexographic printing plate for letterpress printing involving a phase of laser gravure on a polymerised layer of base stock, **characterized in that** it includes at least two beams (5n) of different wavelengths distributed by at least one laser source (1), at least one of which beams operates in the infrared in order to engrave the surface of the polymer (4) at high speed and medium resolution and at least one other of which beams operates in the ultraviolet in order to engrave at high resolution.

2. Production device according to claim 1, **characterized in that** it comprises a control unit (2) controlling the operation of the laser source or sources (1) as well as the focusing of a focusing optical system (7) arranged at right angles to the polymer surface (4) for each beam in order to maintain the optimum distance between the focusing optical system (7) and the surface of the polymer (4) to be treated.

3. Production device according to claim 2, **characterized in that**, at the outlet of at least one of the laser sources (1), is arranged a frequency multiplier with which the emission wavelength can be divided by the same factor, associated with separating means (6) directing each beam to the focusing optical system (7).

4. Production device according to either claim 2 or 3, **characterized in that** the control unit (2) comprises, in addition, a system of control (8) in real time of the engraving of the polymer (4) intended to control and pilot-control the movements of the focusing optical system (7) associated with each beam.

5. Production device according to any one of the preceding claims, **characterized in that** each of the beams includes, in the interaction area, a system (10) of suction (10a) and/or blowing (10b) intended to eliminate any residues and products of ablation during engraving.

6. Production device according to any one of the preceding claims, **characterized in that** it includes an energy and/or optical control block (11) placed in the optical path of the beam or beams.

7. Production device according to claim 3, **characterized in that** the control system (8) is constituted by a system of acquisition of three-dimensional images of the engraving of the plates in polymer (4), transmitting data in real time to the control unit (2) and to the software part of a data processing system carrying out a three-dimensional reconstitution of the flexographic plate treated (4) and compares it with the source files, acquired in the central unit, so as to be able to control and pilot-control the movements of the optical block and/or of the engraving head.

8. Production device according to claim 4, **characterized in that** the suction and/or blowing system (10) is constituted by a suction intake/blowing nozzle which is coaxial with the laser beam(s) (5a,..., 5n).

9. Production device according to claim 5, **characterized in that** the energy and/or optical block (11) is constituted by a photodiode and a calorimeter.

10. Production device according to either claim 5 or 8, **characterized in that** the control block (11) is removable and usable on demand.

11. Production device according to any one of the preceding claims, **characterized in that** the polymer (4) is made of elastomeric material of the EPDM (ethylene propylene diene monomer) type.

12. Production device according to claim 11, **characterized in that** the plate in polymer (4) comprises a rigid structure of the glass fibre or ceramic type.

## Patentansprüche

1. Vorrichtung zur Herstellung eines flexografischen Druckstocks für ein Druckverfahren, das eine Phase der Lasergravur auf einer polymerisierten Schicht eines Trägers beinhaltet, **dadurch gekennzeichnet, dass** sie mindestens zwei Strahlen (5n) mit unterschiedlichen Wellenlängen umfasst, die von mindestens einer Laserquelle (1) stammen, wobei mindestens einer der Strahlen im Infrarotbereich wirkt, um die Oberfläche des Polymers (4) mit großer Geschwindigkeit und einer mittleren Auflösung zu gravieren, und mindestens der andere Strahl im ultravioletten Bereich wirkt, um mit einer hohen Auflösung zu gravieren.

2. Vorrichtung zur Herstellung nach Anspruch 1, **dadurch gekennzeichnet, dass** sie eine Kontrolleinheit (2) beinhaltet, die die Funktion der Laserquelle(n) (1) sowie die Fokussierung einer Fokussierungsoptik (7) steuert, die senkrecht zur Polymeroberfläche (4) für jeden Strahl angeordnet ist, um den optimalen Abstand zwischen der Fokussierungsoptik (7) und der Oberfläche des zu behandelnden Polymers (4) zu bewahren.

3. Vorrichtung zur Herstellung nach Anspruch 2, **dadurch gekennzeichnet, dass** am Ausgang von mindestens einer der Laserquellen (1) ein Frequenzmultiplikator angeordnet ist, der es ermöglicht, die Sendewellenlänge um einen entsprechenden Faktor zu unterteilen, und der mit Strahlteilmitteln (6) verbunden ist, die jeden Strahl zur Fokussierungsoptik (7) leiten.

4. Vorrichtung zur Herstellung nach Anspruch 2 oder 3, **dadurch gekennzeichnet, dass** die Kontrolleinheit (2) ferner ein Echtzeit-Kontrollsystem (8) für die Gravur des Polymers (4) beinhaltet, das dazu bestimmt ist, die Bewegungen der Fokussierungsoptik (7), die jedem Strahl zugeordnet ist, zu lenken und steuern.

5. Vorrichtung zur Herstellung nach einem der vorhergehenden Ansprüche, **dadurch gekennzeichnet, dass** jeder der Strahlen im Bereich der Interaktionszone ein Ansaug-(10a) und/oder Blas- (10b) -system (10) aufweist, das dazu bestimmt ist, mögliche Rückstände und durch die Gravur abgetragene Produkte zu beseitigen.

6. Vorrichtung zur Herstellung nach einem der vorhergehenden Ansprüche, **dadurch gekennzeichnet, dass** sie einen optischen und/oder energetischen Kontrollblock (11) aufweist, der auf der optischen Bahn des oder der Strahlen angeordnet ist.

7. Vorrichtung zur Herstellung nach Anspruch 3, **dadurch gekennzeichnet, dass** das Kontrollsystem (8) von einem Bilderfassungssystem zur dreidimensionalen Erfassung der Gravur der Polymerplatten (4) gebildet ist, das Echtzeitdaten an die Kontrolleinheit (2) und an den Softwareteil eines Datenverarbeitungssystems überträgt, das eine dreidimensionale Rekonstruktion der bearbeiteten flexografischen Platte (4) durchführt und diese mit den Quellendateien, die in der Zentraleinheit erfasst sind, vergleicht, um die Bewegungen des optischen Blocks und/oder des Gravurkopfes zu lenken und steuern.

8. Vorrichtung zur Herstellung nach Anspruch 4, **dadurch gekennzeichnet, dass** das Ansaug- und/oder Blassystem (10) von einer Ansaug-/Blasdüse gebildet ist, die zu dem (den) Laserstrahl(en) (5a, .... 5n) koaxial ist.

9. Vorrichtung zur Herstellung nach Anspruch 5, **dadurch gekennzeichnet, dass** der optische und/oder energetische Block (11) von einer Fotodiode und einem Kalorimeter gebildet ist.

10. Vorrichtung zur Herstellung nach Anspruch 5 oder 8, **dadurch gekennzeichnet, dass** der Kontrollblock (11) abnehmbar und nach Bedarf verwendbar ist.

11. Vorrichtung zur Herstellung nach einem der vorhergehenden Ansprüche, **dadurch gekennzeichnet, dass** das Polymer (4) aus einem Elastomer vom Typ EPDM (Ethylen-Propylen-Dien-Monomer) gebildet ist.

12. Vorrichtung zur Herstellung nach Anspruch 11, **dadurch gekennzeichnet, dass** die Polymerplatte (4) eine starre Struktur vom Typ Glas- oder Keramikfaser aufweist.
